# FASCICULE DE BREVET EUROPEEN

(11) **EP 2 513 537 B1**
(45) Date de publication et mention de la délivrance du brevet: **05.03.2014**
(21) Numéro de dépôt: 10805815.7
(22) Date de dépôt: 15.12.2010
(51) Int. Cl.: F16L 1/19, F16L 1/20, F16L 1/23, E21B 19/10, E21B 19/22

(54) **Dispositif de maintien d'un embout de connexion d'une conduite flexible dans une installation de pose en mer**
Vorrichtung zum Abstützen eines Anschlussfittings eines flexiblen Rohrs bei einer Offshore-Installation
Device for supporting a connection fitting of a flexible pipe in an offshore installation

(30) Priorité: 16.12.2009 FR 0959031
(43) Date de publication de la demande: 24.10.2012
(73) Titulaire: Technip France S.A.S., 92400 Courbevoie (FR)
(72) Inventeur: AQUINO, Roberto, 20530-560 Rio De Janeiro (BR); LAAF, Fred, 24220-030 Rio De Janeiro (BR); FERREIRA DA SILVA, Leinaldo, 23080-720 Rio De Janeiro (BR)
(74) Mandataire: Jacobson, Claude
(86) Numéro de dépôt international: PCT/FR2010/052750
(87) Numéro de publication internationale: WO 2011/080459

(56) Documents cités:
- WO-A1-91/15699
- US-A- 1 659 783
- US-A- 1 708 322
- US-A- 1 721 024
- US-A- 3 748 702
- US-A- 4 275 487
- US-A1- 2006 102 337
- US-A1- 2009 056 930

## Description

La présente invention concerne un dispositif selon le préambule de la revendication 1. Un tel dispositif est connu du document US 4,275,487.

L'invention concerne également un procédé de pose d'une conduite flexible à partir d'un support flottant au moyen d'une installation comportant un tel dispositif de maintien.

Dans la présente demande, le terme «conduite flexible » désigne à la fois les conduites flexibles sous-marines, les ombilicaux sous-marins, et les structures tubulaires flexibles combinant les fonctions des conduites flexibles et des ombilicaux sous-marins.

Les conduites flexibles sous-marines servent essentiellement à transporter le pétrole ou le gaz extrait d'un gisement «off-shore». Elles sont notamment décrites dans le document normatif API RP 17B « Recommended Practice for Flexible Pipe » publié par l'American Petroleum Institute (API).

Les ombilicaux sous-marins servent principalement à transporter des fluides, de la puissance et des signaux à des équipements sous-marins, du type par exemple vannes, têtes de puits, collecteurs, pompes ou séparateurs, en vue d'alimenter en puissance et de contrôler et commander à distance les équipements. Ils peuvent aussi servir à transporter divers fluides destinés à être injectés à l'intérieur d'une conduite principale de transport d'hydrocarbure, en vue soit de faciliter l'écoulement dudit hydrocarbure, par exemple par injection d'agents chimiques visant à prévenir la formation de bouchons d'hydrate, ou de méthane facilitant la remontée du pétrole vers la surface, soit d'assurer la maintenance de ladite conduite principale, par injection d'inhibiteurs de corrosion. De tels ombilicaux sous-marins sont notamment décrits dans le document normatif API 17E « Specification for Subsea Umbilicals » publié par l'American Petroleum Institute.

La conduite flexible est formée de plusieurs tronçons qui sont reliés entre eux par des embouts de connexion. Ces embouts de connexion sont rigides et présentent un diamètre extérieur supérieur au diamètre extérieur de la conduite flexible.

Le document WO 91115699 au nom de la demanderesse décrit un dispositif de pose de ce type de conduites flexibles comportant des moyens tensionneurs principaux, de type treuil linéaire et des moyens tensionneurs auxiliaires, pour assurer la descente d'un tronçon de conduite flexible comportant un embout de connexion, les moyens tensionneurs principaux et les moyens tensionneurs auxiliaires étant aptes à saisir successivement la conduite flexible pour assurer la descente normale de cette conduite flexible, et respectivement assurer la descente de la conduite flexible pendant le franchissement des moyens tensionneurs principaux par l'embout de connexion, les moyens tensionneurs principaux étant d'axe sensiblement vertical et constituant le dernier moyen de guidage de la conduite flexible au niveau du support flottant.

Le dispositif de pose comporte également des moyens de retenue auxiliaires qui retiennent le tronçon de conduite flexible par un embout de connexion et qui permettent le franchissement des moyens tensionneurs principaux par ledit tronçon de conduite flexible sur lequel est monté l'embout de connexion.

Ces moyens de retenue auxiliaires comportent, en outre, une table support qui, dans une première position ouverte, laisse passer la conduite flexible ainsi que l'embout de connexion monté sur cette conduite flexible et, dans une seconde position fermée, assure le support de la conduite flexible immergée par l'intermédiaire de cet embout de connexion.

Lors du raccordement des tronçons de la conduite flexible, la table support est amenée en position fermée et le tronçon de la conduite partiellement immergé est maintenu par la table support de façon à pouvoir relier l'embout de connexion du tronçon suivant avec l'embout de connexion du tronçon précédent.

Selon le type de conduite flexible, les embouts de connexion ont des profils extérieurs et des diamètres extérieurs différents. A titre d'exemple, les embouts de connexion peuvent avoir des diamètres extérieurs qui varient de 210 à 550 mm.

De ce fait, la table support est équipée d'un insert ayant un profil déterminé correspondant à l'embout de connexion à maintenir. Il est donc nécessaire d'embarquer sur le support flottant, c'est-à-dire le navire de pose, une gamme complète d'inserts qui sont encombrants et prennent de la place sur le navire.

L'invention a pour but de proposer un dispositif de maintien d'un embout de connexion d'une conduite flexible dans une installation dé pose en mer qui, par des moyens simples à mettre en oeuvre, évite ces inconvénients par une standardisation des pièces supportant l'embout de connexion.

L'invention a donc pour objet un dispositif selon la revendication 1.

Selon d'autres caractéristiques de l'invention, le dispositif est conforme aux revendications 2 à 5.

L'invention a également pour objet un procédé de pose d'une conduite flexible selon les revendications 6 et 7.

Les caractéristiques et avantages de l'invention apparaîtront au cours de la description qui va suivre, donnée à titre d'exemple et faite en référence aux dessins annexés, sur lesquels :
- la Fig. 1 est une vue de profil d'un navire de pose d'une conduite flexible mettant en oeuvre le procédé selon l'invention,
- la Fig. 2 est un schéma explicatif de la mise en oeuvre du procédé de pose avec un dispositif de maintien d'un embout de connexion de la conduite flexible, conforme à l'invention,
- la Fig. 3 est une vue schématique en perspective et en position ouverte d'une table support de l'embout de connexion de la conduite flexible,
- la Fig. 4 est une vue schématique en perspective d'une pièce intercalaire de support de l'embout,
- la Fig. 5 est une vue schématique en perspective d'un secteur de la pièce intercalaire,
- la Fig. 6 est une vue éclatée en perspective de la moitié de la table support et de la pièce intercalaire montée sur l'embout de connexion d'une conduite flexible,
- la Fig. 7 est une vue de dessus de la pièce intercalaire placée sur un embout de connexion de petit diamètre,
- la Fig. 8 est une vue de dessus de la pièce intercalaire placée sur un embout de connexion de grand diamètre,
- la Fig. 9 est une vue de dessus d'une variante de la pièce intercalaire,
- la Fig. 10 est une vue en coupe axiale d'un embout de connexion de petit diamètre maintenu dans la table support au moyen de la pièce intercalaire, et
- la Fig. 11 est une vue en coupe axiale d'un embout de connexion de grand diamètre maintenu dans la table support au moyen de la pièce intercalaire.

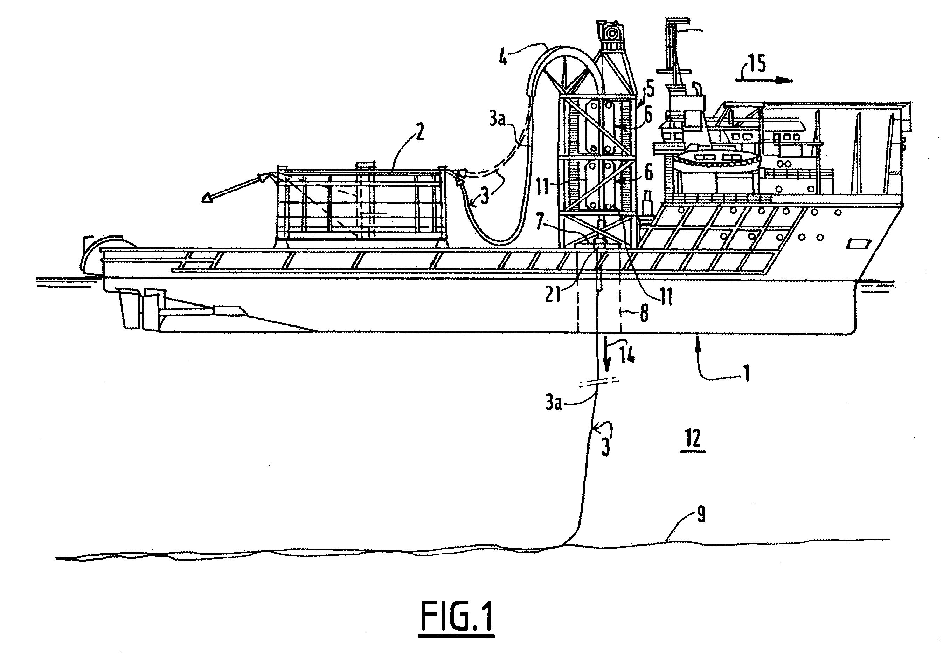

Sur la Fig. 1, on a représenté schématiquement un navire 1 équipé d'une installation de pose d'une conduite flexible 3 composée de tronçons 3a reliés entre eux par des embouts de connexion 21. Le navire de pose 1 est du type équipé de moyens de positionnement dynamique, non représentés, et d'un puits central 8 ou « moon pool » au travers duquel la conduite flexible peut être posée.

Cette installation de pose comporte des moyens de stockage 2 de la conduite flexible formés avantageusement par un panier de forme sensiblement cylindrique d'axe vertical.

L'installation comporte également des moyens de guidage 4 de la conduite flexible 3 comportant par exemple une goulotte 4 permettant le passage de cette conduite flexible 3 à une direction verticale. Entre le panier 2 et la goulotte 4, la conduite flexible 3 prend la forme d'une chaînette.

En sortie des moyens de guidage 4, l'installation est munie de moyens tensionneurs 6 et, comme illustré sur la Fig. 1, de deux moyens tensionneurs 6 de type chaînette montés sur un derrick 5 de forme sensiblement parallélépipédique rectangle. Chacun desdits moyens tensionneurs 6 reprend une partie de la charge. Les moyens tensionneurs 6 sont disposés verticalement en aval des moyens de guidage 4, des moyens de stockage 2 et en amont d'une table support 7 permettant le maintien d'un embout de connexion 21 d'un tronçon 3a de la conduite flexible 3 pour son raccordement avec un autre embout de connexion 21 du tronçon 3a suivant de la conduite flexible 3. Les moyens tensionneurs 6 sont destinés à supporter le poids de la conduite flexible 3 disposée verticalement jusqu'au fond marin 9.

Ces moyens tensionneurs 6 comportent par exemple une pluralité de chenilles 11 qui exercent une force de serrage sur la conduite flexible 3. L'avance simultanée des chenilles 11 exerçant la force de serrage sur la conduite flexible 3 permet la descente de cette conduite flexible 3 selon la flèche 14. Simultanément, le navire 1 avance selon la flèche 15.

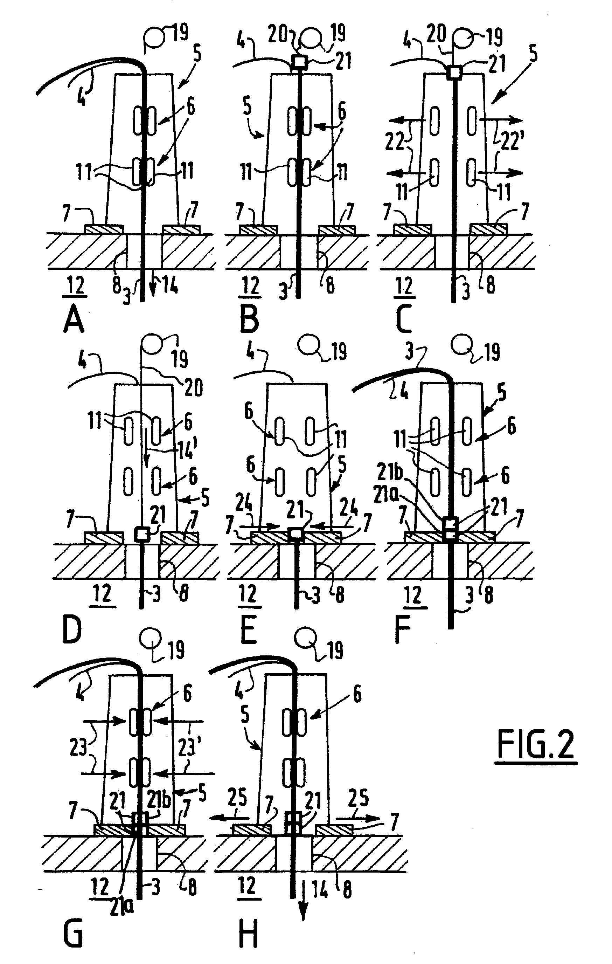

En se reportant maintenant à la Fig. 2, on va décrire les différents étapes de pose successivement de tronçons 3a de la conduite flexible 3.

Ainsi que représenté à la Fig. 2A, au cours d'une étape normale de pose, la table support 7 est en position ouverte pour permettre le passage de la conduite flexible 3 vers la mer 12. Le tronçon 3a de la conduite flexible 3 se trouve au niveau où un embout de connexion 21 n'a pas encore atteint ladite table support 7. En effet, chaque tronçon 3a de conduite flexible 3 se termine par un embout de connexion 21 qui permet de relier les tronçons 3a de la conduite flexible 3 entre eux. Chaque embout de connexion 21 présente un diamètre extérieur supérieur au diamètre extérieur de la conduite flexible 3.

Ensuite, et comme montré à la Fig. 2B, l'embout de connexion 21 terminant un tronçon 3a de la conduite flexible 3, est attaché à des moyens de retenue auxiliaire comprenant un câble 20 relié à un treuil 19. Les moyens tensionneurs 6 assurent la suspension de la partie suspendue de la conduite flexible 3. Les chenilles 11 des moyens tensionneurs 6 sont écartées ainsi qu'illustré par les flèches 22 et 22' de la Fig. 2C. Le câble 20 est tendu, le treuil 19 assurant la suspension de la conduite flexible 3.

Le déroulement du câble 20 à partir du treuil 19 symbolisé par la flèche 14' permet d'amener l'embout 21 au niveau de la table support 7, comme montré à la Fig. 2D.

Sur la Fig. 2E, la table support 7 est fermée comme illustré par les flèches 24 et, à ce moment là cette table support 7 assure la sustentation de la conduite flexible 3 suspendue. Le câble 20 est libéré. Comme illustré à la Fig. 2F, un nouveau tronçon 3a de la conduite flexible 3 se terminant par un embout de connexion 21 est amené. Les embouts de connexion 21 du premier tronçon 3a et du second tronçon 3a de la conduite flexible sont placés l'un contre l'autre et les différentes opérations de connexion de ces embouts de façon à former une liaison hydraulique étanche à la pression nominale et assurer une liaison mécanique, sont effectuées au niveau de la table support 7.

Les moyens tensionneurs 6 sont refermés comme montré par les flèches 23 et 23' afin de permettre la suspension de la conduite flexible 3. A ce moment là, la table support 7 est ouverte, comme montré par les flèches 25 sur la Fig. 2H et la pose de la conduite flexible 3 peut reprendre.

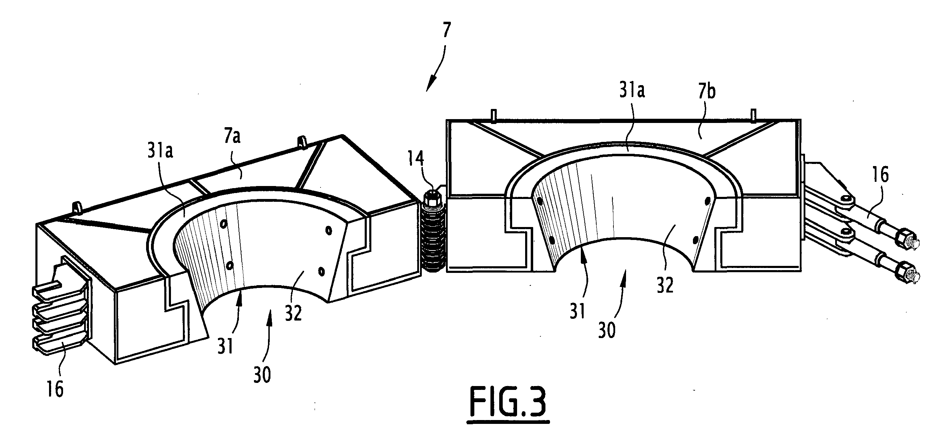

Ainsi que représenté à la Fig. 3, la table support 7 est constituée de deux demi-coquilles, respectivement 7a et 7b reliées entre elles par un axe 14 pour le pivotement de ces demi-coquilles 7a et 7b entre une position ouverte et une position fermée dans laquelle elles sont reliées entre elles par des organes de verrouillage 16, de type connu.

Dans la position ouverte, la table support 7 permet le passage de la conduite flexible 3 et des embouts de connexion 21 et dans la position fermée la table support 7 assure le maintien d'un tronçon 3a de la conduite flexible 3 par l'embout de connexion 21.

Les conduites flexibles 3 ont des diamètres extérieurs différents selon leur utilisation et le produit qu'elles transportent et il en est de même des embouts de connexion 21. A titre d'exemple, le diamètre extérieur des embouts de connexion 21 peut varier de 210 à 550 mm.

Le dispositif de maintien selon l'invention désigné dans son ensemble par la référence 30 et représenté notamment sur les Figs. 3 à 6, permet de couvrir des gammes de diamètres extérieurs des embouts de connexion 21 et d'éviter ainsi une pièce de maintien pour chaque diamètre extérieur des embouts de connexion 21.

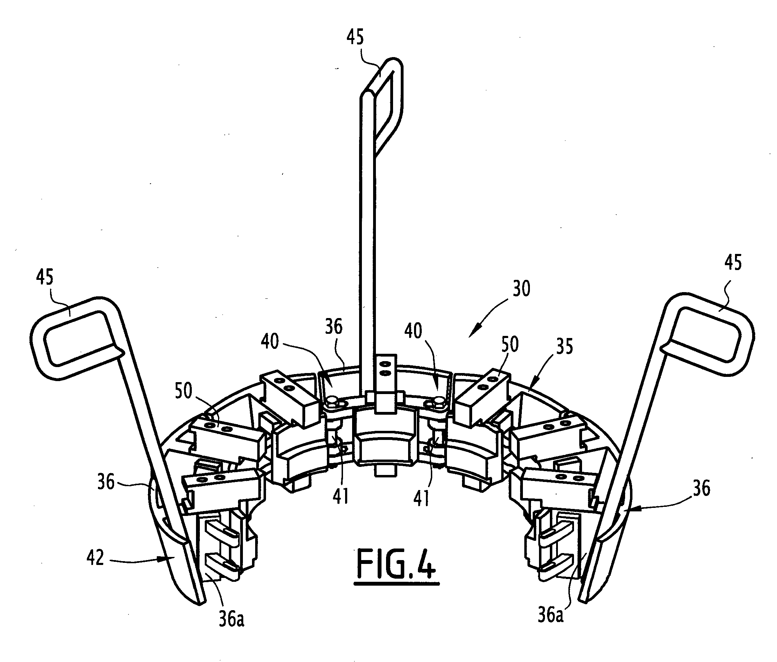

Comme montré sur les Figs. 3 et 4, le dispositif de maintien se compose de deux éléments, un insert 31 et une pièce intercalaire de support 35.

L'insert 31 représenté à la Fig. 3 est destiné à être monté dans la table support 7 et cet insert 31 comporte une paroi extérieure de forme complémentaire à la paroi intérieure de la table support 7.

L'insert 31 comporte un passage axial formant une portée intérieure 32 conique. De préférence, l'insert 31 est composé de deux demi-coquilles 31 a.

D'une manière générale, la pièce intercalaire 35 comprend un anneau composé de plusieurs secteurs 36 dont deux secteurs d'extrémité 36a sont séparables de façon à pouvoir ouvrir l'anneau et à le placer autour de l'embout de connexion 21, comme on le verra ultérieurement.

Les secteurs intermédiaires 36 placés entre les deux secteurs d'extrémité 36a sont reliés entre eux et auxdits secteurs d'extrémité 36a par des moyens 40 d'adaptation sur toute la périphérie d'embouts de connexion 21 de différents diamètres extérieurs.

Les secteurs 36, lorsqu'ils sont en place sur l'embout de connexion 21 à maintenir forment une paroi extérieure 42 conique de l'anneau complémentaire à la portée conique 32 de l'insert 31.

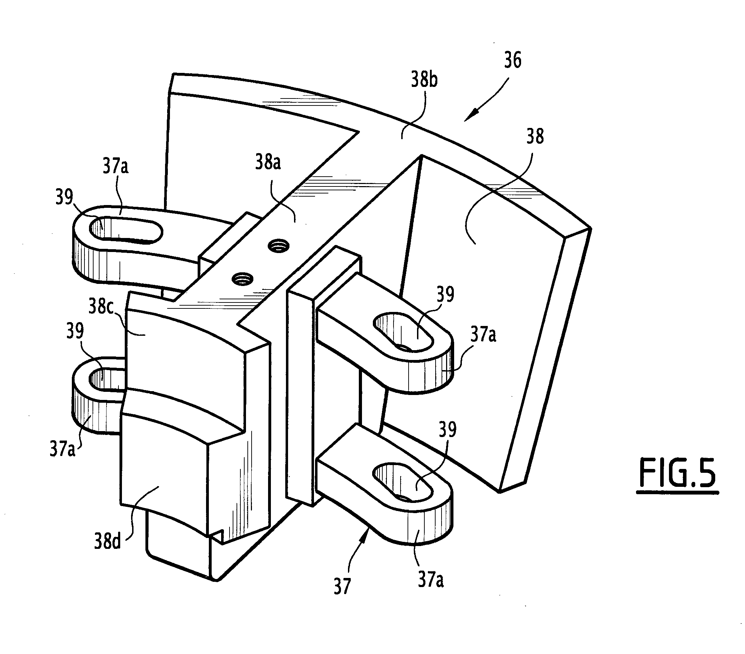

En se reportant maintenant à La Fig. 5, on va décrire un secteur 36, les autres secteurs 36 étant identiques.

Le secteur 36 comporte un maillon 37 en forme d'arc de cercle et qui, dans l'exemple de réalisation représenté sur les figures, est formé de deux pattes 37a parallèles. Le maillon 37 porte un élément de support 38 en forme de «I» comportant une branche centrale 38a solidaire des pattes 37a du maillon 37, une branche d'extrémité 38b extérieure en arc de cercle déterminant une portion de la paroi extérieure 42 conique de l'anneau et une branche d'extrémité 38c intérieure en arc de cercle formant une surface d'appui de l'embout de connexion 21 à maintenir dans la table support 7.

Dans l'exemple de réalisation représenté à la Fig. 5, la branche d'extrémité 38c intérieure comporte un rebord en saillie 38d destiné par exemple à venir s'engager dans une gorge ménagée dans l'embout de connexion 21 à maintenir.

Les moyens 40 d'adaptation de la pièce intercalaire 35 autour d'embouts de connexion 21 de différents diamètres extérieurs, sont formés par une articulation reliant deux maillons 37 de deux secteurs 36 contigus et permettant un écartement des secteurs 36 entre eux.

Ainsi que montré sur les Figs. 4 et 5, l'articulation comporte un axe 41 traversant les pattes 37a de deux maillons 37 contigus par un trou oblong 39 ménagé dans chaque patte 37a desdits maillons 37.

Ainsi, l'axe 41 peut se déplacer dans les trous oblongs 39 des maillons 37 permettant un déplacement des secteurs 36 les uns par rapport aux autres afin d'obtenir une répartition équidistante des secteurs 36, d'une part, sur toute la périphérie de l'embout de connexion 21 à maintenir en fonction de son diamètre extérieur et, d'autre part, sur la portée conique 32 de l'insert 31. De plus, les secteurs 36 de la pièce intercalaire 35 sont maintenus dans un plan horizontal perpendiculaire à l'axe vertical de l'embout de connexion 21 assurant un appui uniforme de la paroi extérieure 42 conique sur la portée conique 32 de l'insert 31.

La pièce intercalaire 35 est également équipée de poignées de manutention 45 uniformément réparties permettant de porter cette pièce intercalaire 35 et de la positionner autour de l'embout de connexion 21 à maintenir.

Dans l'exemple de réalisation représenté sur les figures, les poignées de manutention 45 sont au nombre de trois.

La liaison de deux embouts de connexion 21 est réalisée de la façon suivante.

Tout d'abord, les opérateurs placent dans la table support 7 en position ouverte, les deux demi-coquilles 31 a de l'insert 31, comme montré à la Fig. 3, et la table support 7 est fermée de façon à supporter un embout de connexion 21 d'un tronçon 3a de la conduite flexible 3 déjà immergé.

Cet embout de connexion 21 est amené à proximité de la table support 7 et le premier tronçon 3a de la conduite flexible 3 est maintenu dans cette position par le câble 20 du treuil 19.

Dans cette position, les opérateurs au moyen des poignées de manutention 45 amènent la pièce intercalaire 35 à proximité de l'embout de connexion 21 en maintenant les secteurs d'extrémité 36a en position écartée, ainsi que montré à la Fig.4.

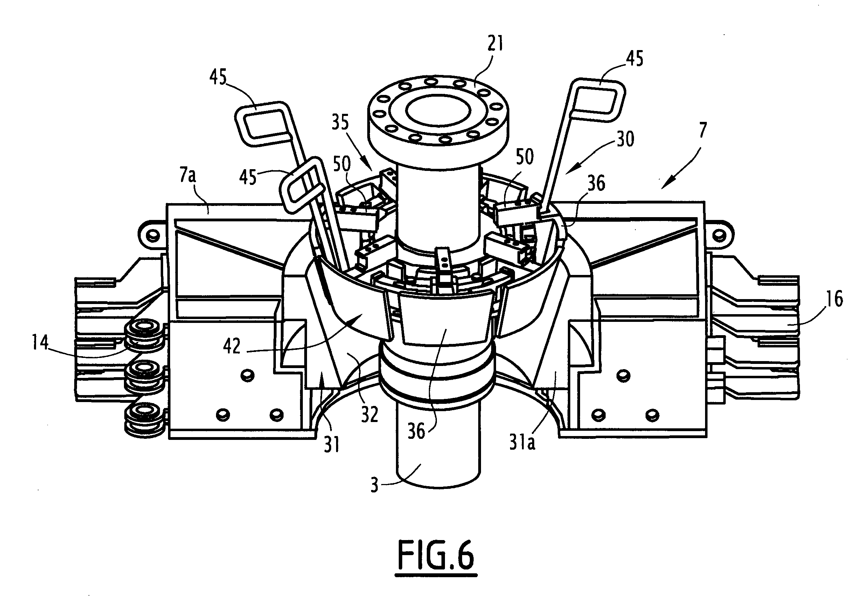

Les opérateurs au moyen des poignées de manutention 45 placent la pièce intercalaire 35 autour de l'embout de connexion 21 et referment cette pièce intercalaire 35 sur l'embout de connexion 21, ainsi que représenté à la Fig. 6.

Compte tenu des moyens 40 d'adaptation entre les secteurs 36 en fonction du diamètre extérieur de l'embout de connexion 21 et qui sont constitués par les axes 41 placés dans les trous oblongs 39, les secteurs 36 se répartissent de manière équidistante autour de l'embout de connexion 21 pour que les rebords en saillie 38d des éléments de support 38 assurent un appui uniformément réparti sur la périphérie de l'embout de connexion 21.

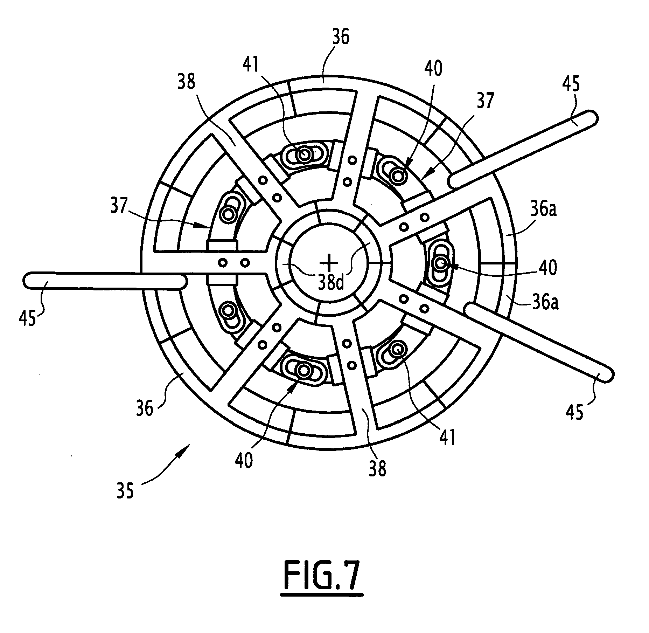

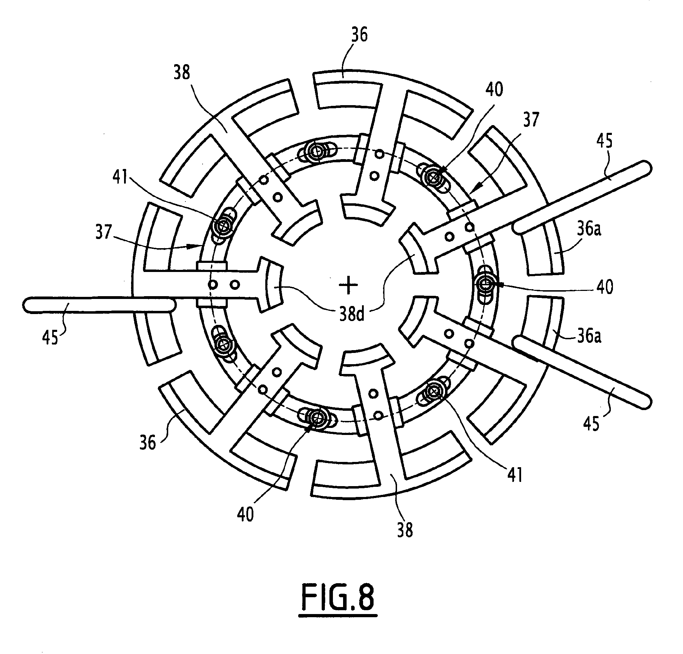

Selon un premier mode de réalisation représenté sur les Figs. 7 et 8, les secteurs d'extrémité 36a peuvent être reliés par un axe 41 après la pose de la pièce intercalaire 35 autour de l'embout de connexion 21 à maintenir. Dans ce cas, ces secteurs d'extrémité 36a comportent des pattes 37a de chaque côté de l'élément de support 38 et chaque patte 37a est munie d'un trou oblong 39 pour le passage de l'axe 41 de liaison.

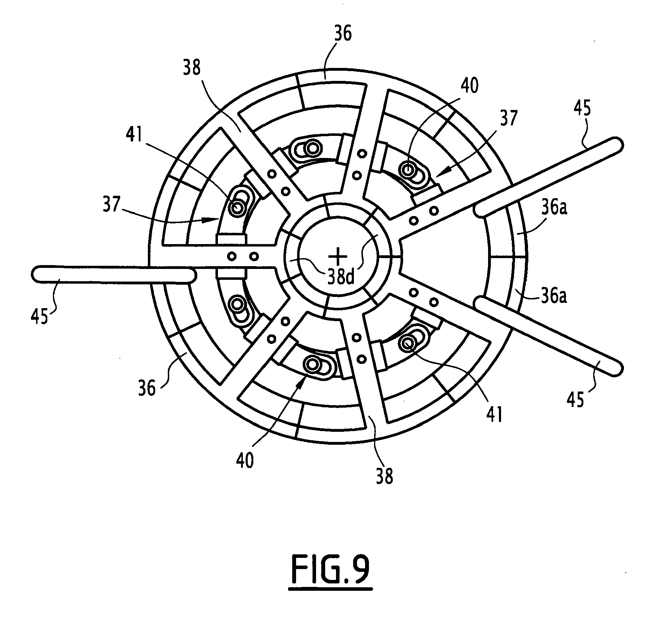

Selon un second mode de réalisation représenté à la Fig. 9, les secteurs d'extrémité 36a ne sont pas reliés et, dans ce cas, l'élément de support 38 de chaque secteur d'extrémité 36a ne comporte des pattes 37a que d'un seul côté.

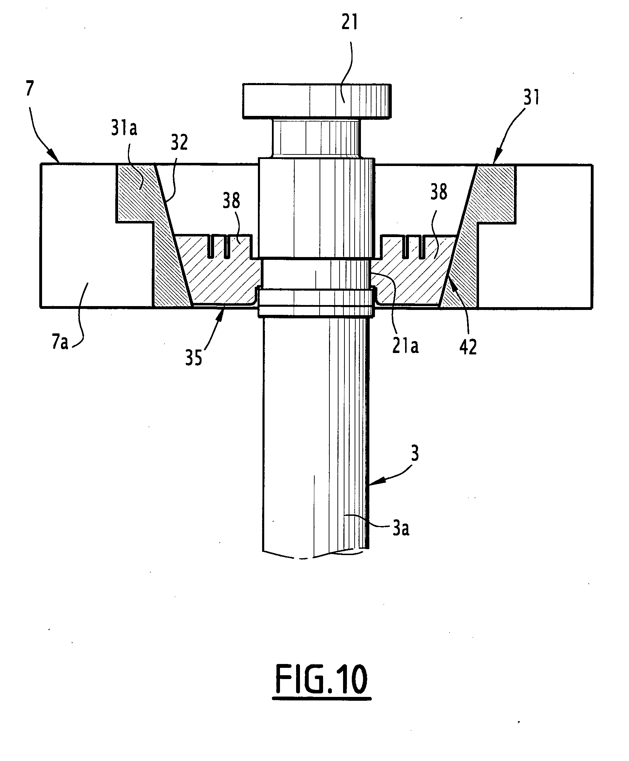

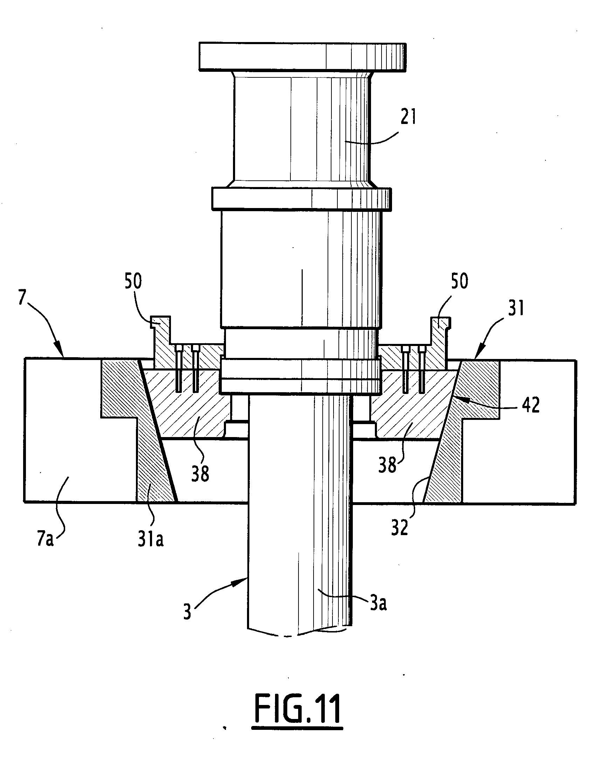

Après avoir posé la pièce intercalaire 35 sur l'embout de connexion 21, le premier tronçon 3a de la conduite flexible 3 est descendu par le treuil 19 pour que la paroi extérieure 42 conique des secteurs 36 de l'anneau formant la pièce intercalaire 35 vienne en appui sur la portée conique 32 de l'insert 31 placé dans la table support 7, ainsi que montré sur les Figs. 10 et 11. Préalablement, la pièce intercalaire 35 a éventuellement été fixée sur l'embout de connexion 21 par des moyens de blocage comprenant des pattes amovibles 50 montées sur la branche centrale 38a des éléments de support 38 en «I», ainsi que représenté sur les Figs. 4 et 11.

Ces pattes 50 sont utilisées ou non selon la forme extérieure de l'embout de connexion 21.

En effet, le rebord en saillie 38d de l'élément de support 38 de chaque secteur 36 peut être placé dans une gorge 21 a ménagée dans l'embout de connexion 21, comme montré à la Fig. 10 et la pièce intercalaire 35 est dans ce cas maintenue sur l'embout de connexion 21 en reliant les secteurs d'extrémité 36a par un axe 41.

Selon une variante représentée à la Fig. 11, les rebords en saillie 38d de l'élément de support de chaque secteur 36 servent uniquement d'appui à l'embout de connexion 21. Dans ce cas, les pattes 50 de blocage sont utilisées afin de solidariser la pièce intercalaire 35 avec cet embout de connexion 21.

Une pièce intercalaire 35 est conçue pour couvrir une gamme de diamètres extérieurs d'embouts de connexion 21.

A titre d'exemple, la pièce intercalaire 35 représentée sur les Figs. 7, 8, 10 et 11 peut supporter des embouts de connexion 21 dont le diamètre extérieur varie entre 215 et 330 mm. Pour tous les embouts de connexion 21 ayant un diamètre extérieur compris entre ces deux valeurs, les secteurs 35 sont uniformément répartis à la périphérie de l'embout de connexion 21 et dans l'insert 31 afin d'avoir une répartition égale du poids du tronçon 3a de la conduite flexible 3 à supporter par la pièce intercalaire 35 dans la table support 7.

Dans le cas d'un diamètre extérieur de l'embout de connexion 21 égal à 215 mm, les secteurs 36 sont jointifs, comme montré à la Fig. 7, et la pièce intercalaire 35 est en appui sur la partie inférieure de la portée conique 32 de l'insert 31, comme montré à la Fig. 10.

Dans le cas, d'un embout de connexion 21 de diamètre extérieur égal à 330 mm les secteurs 36 de la pièce intercalaire 35 sont écartés les uns des autres, comme représenté à la Fig. 8 ce qui augmente le diamètre extérieur de l'anneau de cette pièce intercalaire 35 et ladite pièce intercalaire 35 est en appui sur la partie supérieure de la portée conique 32 de l'insert 31, comme montré à la Fig. 11.

L'écartement des secteurs 36 est rendu possible grâce aux trous oblongs 39 des maillons 37 et à l'axe 41 placé dans ces trous oblongs maintenant lesdits maillons entre eux.

A titre d'exemple, le demi-angle au sommet du cône déterminé par la portée conique 32 de l'insert 31 est compris entre 10° et 45°, et avantageusement de l'ordre de 15°.

L'embout de connexion 21 du tronçon 3a suivant de la conduite flexible est placé sur l'embout de connexion 21 soutenu par la table support 7 et les deux embouts de connexion 21 sont reliés entre eux de façon à former une liaison hydraulique étanche à la pression nominale et assurer une liaison mécanique.

Après avoir réalisé les différentes liaisons, sur les embouts de connexion 21, la conduite flexible 3 est soulevée de façon à libérer la table support 7.

La pièce intercalaire 35 est retirée et la table support 7 est ouverte et le deuxième tronçon 3a est déroulé pour continuer l'immersion de la conduite flexible 3.

Le dispositif de maintien selon l'invention permet grâce à l'insert 31 et à la pièce intercalaire 35 de supporter des embouts de connexion 21 de la conduite flexible 3 ayant des diamètres extérieurs différents ce qui évite l'emploi d'une pièce de liaison pour chaque diamètre d'embout de connexion.

## Revendications

1. Dispositif (30) de maintien d'un embout de connexion (21) d'une conduite flexible (3) dans une installation de pose en mer de ladite conduite flexible (3) à partir d'un support flottant (1), ledit dispositif comportant une table support (7) déplaçable entre une position ouverte de passage de la conduite flexible (3) et de l'embout (21) et une position fermée de support d'un tronçon (3a) de la conduite flexible (3) par l'embout (21) de diamètre extérieur supérieur au diamètre extérieur de la conduite flexible (3), ledit dispositif (30) comprenant un insert (31) monté dans la table support (7) et comportant un passage axial formant une portée intérieure (32) conique et une pièce intercalaire (35) de support de l'embout (21) comportant, d'une part, des moyens (40) d'adaptation sur toute la périphérie d'embouts (21) de différents diamètres extérieurs et, d'autre part, une paroi extérieure (42) conique, complémentaire à la portée conique (32) de l'insert (31),
**caractérisé en ce que** la pièce intercalaire (35) comprend un anneau composé de plusieurs secteurs (36) comportant deux secteurs d'extrémité (36a) séparables et des secteurs intermédiaires (36) reliés entre eux et auxdits secteurs d'extrémité (36a) par lesdits moyens (40) d'adaptation,
chaque secteur comprenant un maillon (37) en forme d'arc de cercle portant un élément de support (38) en «I» comportant une branche centrale (38a) solidaire du maillon (37) correspondant, une branche d'extrémité (38b) extérieure en arc de cercle formant une portion de la paroi extérieure (42) conique de la pièce intercalaire (35) et une branche d'extrémité (38c) intérieure en arc de cercle formant une surface d'appui (38d) de l'embout de connexion (31),
et **en ce que** les moyens (40) d'adaptation sont formés par une articulation reliant deux maillons (37) contigus et comportant un axe (41) traversant chacun desdits maillons (37) par un trou oblong (39) pour une répartition équidistante des secteurs (36) autour de l'embout (21) et sur la portée conique (32) de l'insert (31).

2. Dispositif (30) selon la revendication 1, **caractérisé en ce que** l'insert (31) comporte deux demi-couronnes (31 a).

3. Dispositif (30) selon l'une quelconque des revendications précédentes, **caractérisé en ce que** la pièce intercalaire (35) comporte des moyens (50) de blocage de l'embout de connexion (21).

4. Dispositif (30) selon la revendication 3, **caractérisé en ce que** les moyens de blocage de l'embout (21) comprennent des pattes (51) amovibles montées sur la branche centrale (38a) des éléments de support (38).

5. Dispositif (30) selon l'une quelconque des revendications précédentes, **caractérisé en ce que** la pièce intercalaire (35) de support comporte des poignées (45) de manutention.

6. Procédé de pose d'une conduite flexible (3) à partir d'un support flottant (1) au moyen d'une installation comportant un dispositif (30) de maintien selon l'une quelconque des revendications précédentes, **caractérisé en ce qu'**il comporte les étapes consistant :
- à dérouler un tronçon (3a) de la conduite flexible (3) comportant un embout de connexion (21) de diamètre extérieur supérieur au diamètre extérieur supérieur de la conduite (3),
- à reprendre la traction exercée par la conduite flexible (3),
- à monter sur la table support (7), l'insert (31),
- à fermer cette table support (7),
- à amener à proximité de la table support (7), l'embout de connexion (21),
- à placer sur l'embout de connexion (21) la pièce intercalaire (35) dont les secteurs (36) se répartissent de façon équidistante autour de l'embout (21),
- à descendre le tronçon (3a) de la conduite flexible (3) pour amener progressivement en contact la paroi extérieure (42) conique de la pièce intercalaire (35) sur la portée intérieure (32) conique de l'insert (31) pour maintenir ledit tronçon (3a),
- à fixer sur ledit embout de connexion (21) du premier tronçon (3a) un embout de connexion (21) d'un deuxième tronçon (3a) de la conduite flexible (3),
- à retirer l'embout de connexion de la table support (7),
- à enlever la pièce intercalaire (35),
- à ouvrir la table support (7),
- à dérouler le deuxième tronçon (3a) de la conduite flexible (3), et
- à renouveler ces étapes pour chaque tronçon (3a) de la conduite flexible (3).

7. Procédé selon la revendication 6, **caractérisé en ce que** après avoir posé sur l'embout de connexion (21) la pièce intercalaire (35), on solidarise les secteurs d'extrémité (36a) de ladite pièce intercalaire (35).

## Patentansprüche

1. Vorrichtung (30) zum Abstützen eines Verbindungsstutzens (21) einer flexiblen Leitung (3) in einer Offshore-Installation der flexiblen Leitung (3) von einem Schwimmkörper (1) aus, wobei die Vorrichtung einen Trägertisch (7) aufweist, der zwischen einer offenen Position für den Durchgang der flexiblen Leitung (3) und des Stutzens (21) und einer geschlossenen Position für die Abstützung eines Abschnitts (3a) der flexiblen Leitung (3) durch den Stutzen mit einem Außendurchmesser größer als der Außendurchmesser der flexiblen Leitung (3) beweglich ist, wobei die Vorrichtung (30) einen Einsatz (31), der in dem Trägertisch (7) montiert ist und einen einen konischen inneren Umfang bildenden axialen Durchgang aufweist und ein Zwischenstück (35) für die Abstützung des Stutzens (21) umfasst, das einerseits Mittel (40) zur Anpassung über den gesamten Umfang von Stutzen (21) unterschiedlicher Außendurchmesser und andererseits eine konische Außenwand (42), komplementär zu dem konischen Umfang (32) des Einsatzes (31) umfasst,
**dadurch gekennzeichnet, dass** das Zwischenstück (35) einen aus mehreren Sektoren (36) zusammengesetzten Ring, der zwei trennbare Endsektoren (36a) und Zwischensektoren (36) aufweist, die untereinander und mit den Endsektoren (36a) durch die Anpassungsmittel (40) verbunden sind,
wobei jeder Sektor ein Glied (37) in Form eines Kreisbogens aufweist, das ein Stützelement (38) in I-Form trägt, das einen mit dem korrespondierenden Glied (37) verbundenen Mittelschenkel (38a), einen äußeren Endschenkel (38b) in Form eines Kreisbogens, der einen Bereich der konischen Außenwand (42) des Zwischenstücks (35) bildet, und einen inneren Endschenkel (38c) in Kreisbogenform, der eine Abstützfläche (38d) des Verbindungsstutzens (31) bildet, umfasst,
und dass die Anpassungsmittel (40) durch eine Gelenkanordnung gebildet werden, die zwei aneinandergrenzende Glieder (37) verbindet und die eine Achse (41) umfasst, die jedes der Glieder (37) über ein Langloch (38) durchquert für eine äquidistante Verteilung der Sektoren (36) um den Stutzen (21) herum und über den konischen Innenumfang (32) des Einsatzes (31).

2. Vorrichtung (30) nach Anspruch 1, **dadurch gekennzeichnet, dass** der Einsatz (31) zwei Halbringe (31a) umfasst.

3. Vorrichtung (30) nach einem beliebigen der vorhergehenden Ansprüche, **dadurch gekennzeichnet, dass** das Zwischenstück (35) Mittel (50) zur Blockierung des Verbindungsstutzens (21) aufweist.

4. Vorrichtung (30) nach Anspruch 3, **dadurch gekennzeichnet, dass** die Mittel zur Blockierung des Stutzens (21) bewegliche Ansätze (51) aufweisen, die an dem Mittelschenkel (38a) der Stützelemente (38) befestigt sind.

5. Vorrichtung (30) nach einem beliebigen der vorhergehenden Ansprüche, **dadurch gekennzeichnet, dass** das Zwischenstück (35) zur Abstützung Handhabungsgriffe (45) aufweist.

6. Verfahren zum Verlegen einer flexiblen Leitung (3) von einem Schwimmkörper (1) aus mittels einer Installation, die eine Vorrichtung (30) zum Abstützen gemäß einem beliebigen der vorhergehenden Ansprüche aufweist, **dadurch gekennzeichnet, dass** es die folgenden Schritte umfasst:
- Abwickeln eines Abschnitts (3a) der flexiblen Leitung (3), der einen Verbindungsstutzen (21) mit einem Außendurchmesser größer als der Außendurchmesser der Leitung (3) aufweist,
- Wegnehmen der durch die flexible Leitung (3) ausgeübten Zugkraft,
- Anordnen des Einsatzes (31) an dem Trägertisch (7),
- Schließen dieses Trägertisches (7),
- Heranführen des Verbindungsstutzens (21) in die Nähe des Trägertisches (7),
- auf den Verbindungsstutzen (21) Anordnen des Zwischenstücks (35), dessen Sektoren (36) sich in gleichabständiger Weise um den Stutzen (21) herum verteilen,
- Absenken des Abschnitts (3a) der flexiblen Leitung, um fortschreitend die konische Außenwand (42) des Zwischenstücks (35) mit dem konischen inneren Umfang (32) des Einsatzes (31) in Kontakt zu bringen, um den Abschnitt (3a) zu halten,
- Befestigen eines Verbindungsstutzens (21) eines zweiten Abschnitts (3a) der flexiblen Leitung auf dem Verbindungsstutzen (28) des ersten Abschnitts (3a),
- Zurückziehen des Verbindungsstutzens von dem Trägertisch (7),
- Entfernen des Zwischenstücks (35),
- Öffnen des Trägertisches (7),
- Abwickeln des zweiten Abschnitts (3a) der flexiblen Leitung (3) und
- Wiederholen dieser Schritte für jeden Abschnitt (3a) der flexiblen Leitung (3).

7. Verfahren nach Anspruch 6, **dadurch gekennzeichnet, dass**, nachdem das Zwischenstück (35) auf dem Verbindungsstutzen (21) angeordnet wurde, die Endsektoren (36a) des Zwischenstücks (35) verbunden werden.

## Claims

1. A device (30) for supporting a connection end piece (21) of a flexible pipe (3) in an offshore facility for laying said flexible pipe (3) from a floating support (1), said device including a holding table (7) displaceable between an open position for the passage of the flexible pipe (3) and of the end piece (21) and a closed position for supporting a segment (3a) of the flexible pipe (3) by the end piece (21) with an outer diameter greater than the outer diameter of the flexible pipe (3), said device comprising an insert (31) mounted in the holding table (7) and including an axial passage forming a tapered interior space (32) and an inserted part (35) for supporting the end piece (21) including means (40) for fitting onto the whole periphery of end pieces (21) of different outer diameters on the one hand and, a tapered outer wall (42), complimentary to the conical seat (32) of the insert (31) on the other hand, **characterized in that**:
the inserted part (35) comprises a ring consisting of several sectors (36) including two separable end sectors (36a) and intermediate sectors (36) connected together and to said end sectors (36a) by said fitting means (40),
each sector (36) comprising a link (37) with the shape of a circular arc bearing an I-shaped supporting element (38) including a central branch (38a) secured to the corresponding link (37), an outer end branch (38b), as a circular arc, forming a portion of the tapered outer wall (42) of the inserted part (35) and inner end branch (38c), as a circular arc, forming a supporting surface (38d) for the connection end piece (31), and **in that**
the fitting means (40) are formed by a joint connecting two contiguous links (37) and including an axis (41) crossing each of said links (37) through an oblong hole (39) for an equidistant distribution of the sectors (36) around the end piece (21) and on the conical seat (32) of the insert (31).

2. The device (30) according to claim 1, **characterized in that** the insert (31) includes two half-crowns (31 a).

3. The device (30) according to any of the preceding claims, **characterized in that** the inserted part (35) includes means (51) for blocking the connection end piece (21).

4. The device (30) according to claim 3, **characterized in that** the means for blocking the end piece (21) comprise removable tabs (51) mounted on the central branch (38a) of the supporting element (38).

5. The device (30) according to any of the preceding claims, **characterized in that** the supporting inserted part (35) includes handling grips (45).

6. A method for laying a flexible pipe (3) from a floating support (1) by means of a facility including a supporting device (30) according to any of the preceding claims, **characterized in that** it includes the steps:
- unwinding a segment (3a) of the flexible pipe (3) including a connection end piece (21) with an outer diameter greater than the outer diameter of the pipe (3),
- spreading out the traction exerted by the flexible pipe (3),
- mounting the insert (31) on the holding table (7),
- closing this holding table (7),
- bringing the connection end piece (21) in proximity to the holding table (7),
- placing on the connection end piece (21) the inserted part (35), the sectors (36) of which are distributed in an equidistant way around the end piece (21),
- moving the segment (3a) of the flexible pipe (3) downwards in order to gradually bring into contact the tapered outer wall (42) of the inserted part (35) on the tapered interior space (32) of the insert (31) in order to hold said segment (3a),
- attaching on said connection end piece (21) of the first segment (3a), a connection end piece (21) of a second segment (3a) of the flexible pipe (3),
- withdrawing the connection end piece from the holding table (7),
- removing the inserted part (35),
- opening the holding table (7),
- unwinding the second segment (3a) of the flexible pipe (3), and
- renewing these steps for each segment (3a) of the flexible pipe (3).

7. The method according to claim 6, **characterized in that** after having laid the inserted part (35) on the connection end piece (21), the end sectors (36a) of the inserted part (35) are secured.
